# FASCICULE DE BREVET EUROPEEN

(11) **EP 0 626 533 B1**
(45) Date de publication et mention de la délivrance du brevet: **15.10.1997**
(21) Numéro de dépôt: 94400781.4
(22) Date de dépôt: 12.04.1994
(51) Int. Cl.: F16L 3/10, F16L 3/22

(54) **Collier de maintien, sur un support, d'un tube ou analogue**
Halteschelle auf einer Stütze für ein Rohr oder dergleichen
Fixing clamp on a support for a pipe or the like

(30) Priorité: 14.04.1993 FR 9304389
(43) Date de publication de la demande: 30.11.1994
(73) Titulaire: SOCIETE EUROPEENNE DE RECHERCHE ET DE COMMERCE, ( SERCO), F-93170 Bagnolet (FR)
(72) Inventeur: Es, Willy, F-92400 Courbevoie-la-Defense (FR)
(74) Mandataire: Flavenot, Bernard

(56) Documents cités:
- FR-A- 2 040 893
- FR-A- 2 326 606
- FR-A- 2 385 966
- FR-A- 2 653 183
- GB-A- 1 031 573
- GB-A- 2 014 644
- US-A- 3 430 904

## Description

La présente invention concerne les colliers de maintien, sur un support, d'une pièce oblongue sensiblement cylindrique du type tube ou analogue, qui trouvent des applications avantageuses dans le domaine du bâtiment pour fixer, par exemple les tuyaux de conduite de fluides, les câbles ou analogues, etc,.

Des colliers qui permettent de fixer sur un support une pièce oblongue ou analogue existent déjà. Ces colliers sont généralement constitués par une tige de fixation, deux demi-bagues de forme générale sensiblement semi-cylindrique, des moyens pour fixer la tige sur l'une des deux demi-bagues, et des moyens pour associer les deux demi-bagues l'une avec l'autre de façon qu'elles forment ensemble une bague complète définissant un espace sensiblement cylindrique suivant un axe longitudinal, fermé latéralement et ouvert à ses deux extrémités de façon à entourer la pièce oblongue.

Cette structure de collier est notamment avantageuse pour la fixation de tubes, mais présente l'inconvénient d'obliger à fabriquer des colliers de même diamètre que les tubes à fixer. Cet inconvénient contribue à augmenter considérablement le prix de revient global de ces colliers, aussi bien à la production que pour la gestion des stocks des entreprises ou des particuliers susceptibles de les utiliser, puisqu'il est nécessaire de prévoir des colliers de toutes dimensions possibles.

On connaît aussi un collier comme celui qui est décrit dans le Brevet FR-A-2 040 893, qui comporte des languettes qui, en exerçant des forces sur les objets à maintenir, les plaquent contre le fond de l'une des deux demi-bagues. Ces languettes permettent de compenser les tolérances de fabrication d'objets qui ont théoriquement le même diamètre mais ne permettent pas de rattraper les différences de positions entre deux colliers consécutifs situés à proximité pour maintenir une même conduite ou de recevoir des tubes ayant des diamètres différents.

La présente invention a ainsi pour but de réaliser un collier de maintien d'une pièce oblongue sensiblement cylindrique du type tube ou analogue, qui obvie en grande partie les inconvénients mentionnés ci-dessus.

Plus précisément, la présente invention a pour objet un collier de maintien, par rapport à un support, d'une pièce oblongue sensiblement cylindrique du type tube ou analogue, comportant:
une tige de fixation apte à être implantée dans ledit support,
deux demi-bagues de forme générale sensiblement cylindrique,
des moyens pour fixer ladite tige sur l'une des deux dites demi-bagues, et
des moyens pour associer les deux demi-bagues l'une avec l'autre de façon qu'elles forment ensemble une bague complète définissant un espace sensiblement cylindrique suivant un axe longitudinal, fermé latéralement et ouvert à ses deux extrémités de façon à entourer ladite pièce oblongue, caractérisé par le fait qu'il comporte en outre:
des moyens pour appliquer, en au moins trois points de la paroi extérieure de ladite pièce oblongue, trois forces élastiques sensiblement concourantes sur ledit axe longitudinal, ledit axe longitudinal passant dans le triangle formé par lesdits trois points.

D'autres caractéristiques et avantages de la présente invention apparaîtront au cours de la description suivante donnée en regard des dessins annexés à titre illustratif, mais nullement limitatif, dans lesquels:
La figure 1 représente une vue en coupe d'un premier mode de réalisation d'un collier selon l'invention, coupe référencée I-I sur la figure 2,
La figure 2 représente une vue de côté du collier selon le mode de réalisation illustré sur la figure 1,
La figure 3 représente un deuxième autre mode de réalisation d'un collier selon l'invention,
Les figures 4 et 5 représentent, sous forme schématique respectivement en vue de face et de dessus, un troisième mode de réalisation d'un collier selon l'invention, et
La figure 6 représente, sous forme schématique, une application de la présente invention à la fixation de deux pièces oblongues pour les maintenir sensiblement parallèles entre elles.

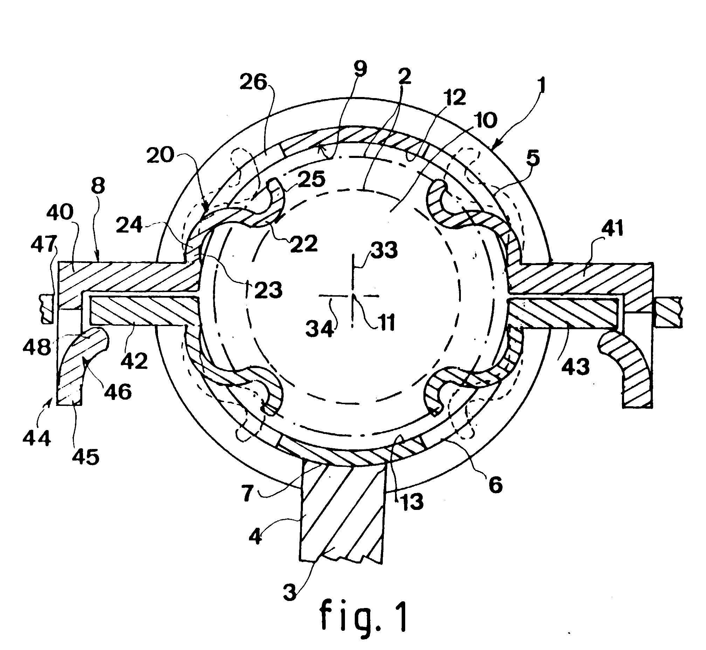

Les figures 1 à 6 représentent plusieurs modes de réalisation d'un collier selon l'invention mais, dans un souci de simplification et pour une meilleure compréhension de la description, les mêmes références y désignent les mêmes éléments, quelle que soit la figure sur laquelle elles apparaissent et quelle que soit la forme de représentation de ces éléments.

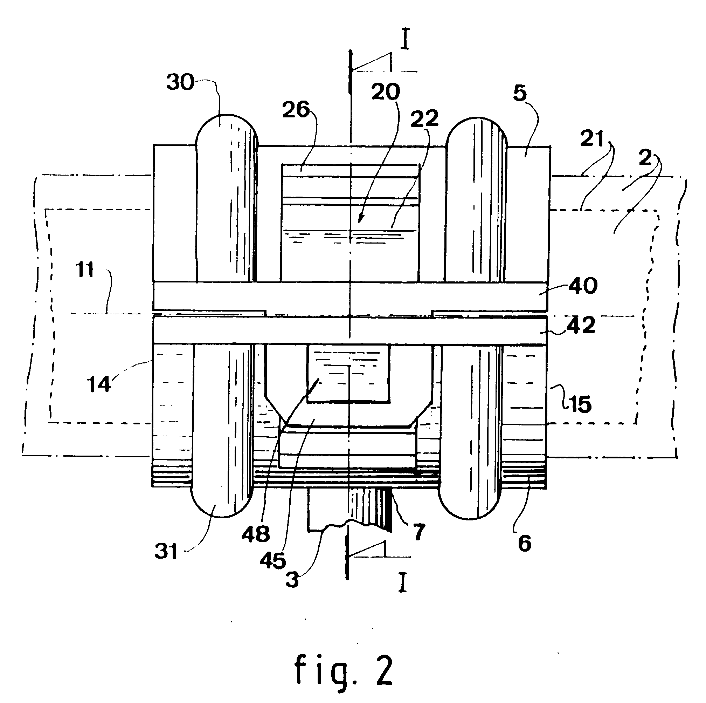

Les figures 1 et 2 représentent un premier mode de réalisation d'un collier 1 pour le maintien, sur un support comme un mur ou analogue, d'une pièce oblongue 2 sensiblement cylindrique du type tube ou analogue.

Ce collier 1 comporte une tige de fixation 3 sur le support généralement constituée, mais non exclusivement, par une vis 4 ou analogue.

Il comporte aussi deux demi-bagues 5, 6 de forme générale sensiblement semi-cylindrique, avantageusement de révolution comme illustré sur les figures, et des moyens 7 pour fixer la tige de fixation 3 sur l'une 6 de ces deux demi-bagues. Ces moyens 7 sont par exemple constitués par de la soudure, un vissage, de l'emboutissage, etc.

Le collier comporte aussi des moyens 8 pour associer les deux demi-bagues 5, 6 l'une avec l'autre de façon qu'elles forment ensemble une bague complète 9 définissant un espace 10 sensiblement cylindrique suivant un axe longitudinal 11, fermé latéralement par la paroi intérieure 12, 13 des demi-bagues 5, 6 et ouvert à ses deux extrémités 14, 15 de façon à entourer la pièce oblongue 2.

Selon une caractéristique importante de l'invention, le collier comporte en outre des moyens 20 pour appliquer, en au moins trois points de la paroi extérieure de la pièce oblongue 2, trois forces élastiques sensiblement concourantes sur l'axe longitudinal 11, cet axe longitudinal passant dans le triangle formé par ces trois points.

Dans les exemples illustrés, le collier comporte quatre points d'application de forces. Cependant, cette réalisation est conforme à l'invention car, selon les lois de la Physique, deux de ces points peuvent être pris comme équivalents à un point situé entre eux et on retrouve alors les trois points en triangle disposés selon la caractéristique de la présente invention énoncée ci-dessus.

Dans un mode de réalisation avantageux, notamment sur le plan de la réalisation industrielle du collier, les moyens 20 pour appliquer au moins trois forces élastiques sur la paroi extérieure de la pièce oblongue 2 sont constitués par trois pattes 22 (quatre pattes 22 dans l'exemple illustré), des moyens 23 pour relier en rotation, ou similaire, une première extrémité 24 de chaque patte 22 avec l'une des deux demi-bagues 5, 6, et des moyens pour exercer un effort élastique sensiblement sur la seconde extrémité 25 de chaque patte pour tendre à maintenir cette seconde extrémité 25 dans l'espace 10.

De préférence, les demi-bagues 5, 6 sont réalisées dans un matériau présentant une certaine résilience et les pattes sont découpées dans la paroi 26 des deux demi-bagues 5, 6 de façon que leur première extrémité 24 reste solidaire de cette paroi 26 en formant en quelque sorte un moyen 23 équivalent à une charnière de rotation, puis déformées élastiquement pour que leur seconde extrémité 25 se trouve dans l'espace 10.

Pour qu'elles ne se déforment pas de façon importante malgré la nature du matériau dans lequel elles sont réalisées et pour leur donner une certaine rigidité, les deux demi-bagues peuvent comporter au moins une nervure de renfort 30, 31 réalisée sur leur paroi, avantageusement dans un plan perpendiculaire à l'axe longitudinal de l'espace 10 et de façon que ces nervures puissent former en quelque sorte des anneaux circulaires quand les deux demi-bagues sont associées pour former la bague complète 9.

Quand le collier comporte quatre pattes comme illustré (ou plus), celles-ci sont disposées sensiblement symétriquement les unes des autres par rapport à des plans 33, 34 passant par l'axe longitudinal 11 de l'espace 10.

Selon une réalisation possible, les moyens 8 pour associer les deux demi-bagues l'une avec l'autre comportent au moins deux ailes latérales 40, 41 et 42, 43 réalisées de chaque côté de chaque demi-bague 5, 6 et à chacune de leurs extrémités sensiblement dans des plans passant par l'axe longitudinal 11 de l'espace 10 de façon que, lorsque les deux demi-bagues sont associées pour former une bague complète 9, les ailes latérales 40, 41 de l'une 5 des deux demi-bagues soient au moins partiellement respectivement en contact avec les ailes latérales 42, 43 de l'autre demi-bague 6, et des moyens 44 pour solidariser entre elles ces ailes latérales en contact deux à deux 40-42 et 41-43.

Selon une réalisation avantageuse, les moyens 44 pour solidariser entre elles les ailes latérales en contact deux à deux comportent une partie en saillie 45 réalisée sur au moins une aile latérale relative à l'une des deux demi-bagues et des moyens 46 pour accrocher cette partie en saillie à l'aile latérale correspondante relative à l'autre demi-bague, ces moyens 46 étant par exemple constitués par un orifice 47 réalisé dans l'aile latérale correspondante de façon que la partie en saillie 45 puisse y pénétrer. Ces moyens de solidarisation 44 des ailes latérales comportent également un clip à ressort 48, par exemple de déformation, solidaire de la partie en saillie 45 et apte à venir buter contre l'aile comportant l'orifice 47. Avantageusement, dans un souci de sécurité de maintien des deux demi-bagues entre elles, les moyens 44 comprendront, comme illustré, une paire de parties en saillie 45, d'orifices 47 et de clips 48.

La figure 1 illustre le fait qu'un même collier selon l'invention peut maintenir des pièces comme des tubes de différents diamètres raisonnablement compris entre deux limites comme les tubes dont la section a été respectivement représentée en traits interrompus et en traits-points. Mais la structure du collier selon l'invention permet aussi, dans le cas par exemple où la disposition des lieux de fixation le rend nécessaire, de maintenir un tube ou analogue à l'aide de plusieurs colliers consécutifs d'un même calibre non alignés, puisque le tube peut se décaler de l'axe de chaque collier pour compenser le désalignement des colliers.

Quand on veut maintenir une pièce oblongue 2, par exemple un tube d'un diamètre compris entre les deux limites définies ci-dessus, à l'aide d'un collier tel que décrit en regard des figures 1 et 2, on place le tube sur les deux pattes solidaires de la demi-bague 6 solidaire de la tige de fixation, puis on place la seconde demi-bague 5 de façon que ses deux pattes 22 viennent au contact de la paroi extérieure 21 du tube. On exerce ensuite un effort pour amener au contact les deux paires d'ailes en enfonçant les deux parties en saillie 45 dans les orifices 47 jusqu'à ce que les clips à ressort 48 s'effacent puis viennent s'appuyer sous les ailes comportant les orifices 47. Dans ce mouvement de rapprochement des deux demi-bagues, les pattes 22 pivotent autour de leur extrémité 24 par déformation élastique, comme représenté en traits interrompus sur la figure 1, leur élasticité de déformation permettant à leur extrémité 25 de rester au contact de la paroi extérieure 21 du tube. Le tube est ainsi parfaitement maintenu tant que les pattes peuvent, par leur déformation élastique, exercer une force élastique entre la paroi intérieure des deux demi-bagues 5, 6 et la paroi extérieure 21 du tube.

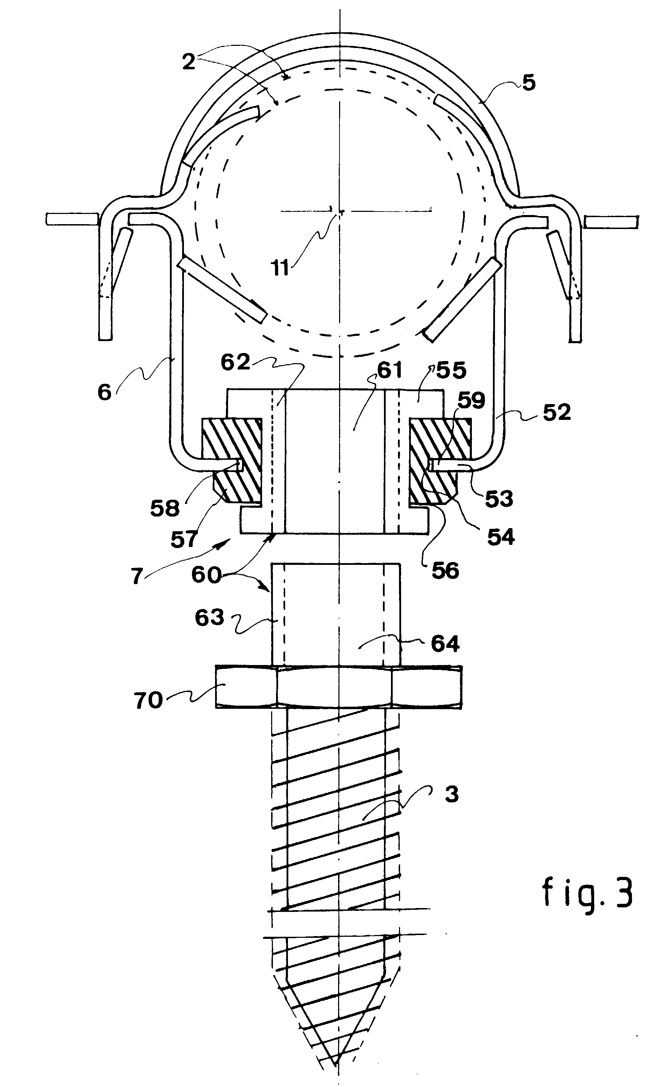

La figure 3 représente un autre mode de réalisation d'un collier selon l'invention, plus particulièrement adapté à la fabrication industrielle à partir d'une tôle d'acier ou analogue.

Dans ce mode de réalisation du collier selon l'invention, la demi-bague 6 sur laquelle est fixée la tige de fixation 3 comporte une partie 52 en forme de "U" (ou, comme illustré, affecte cette forme) et les moyens 7 pour fixer la tige de fixation 3 sur la demi-bague 6 relient la tige à la base 53 de la partie en "U" 52.

Dans le mode de réalisation illustré, les moyens 7 pour lier la tige de fixation 3 avec la base 53 de la partie en "U" comportent un trou 54 réalisé dans la base 53 du "U", un diabolo 55 en forme de toupie ou analogue comportant extérieurement une gorge circulaire 56, un anneau 57 entourant le diabolo en étant situé dans la gorge circulaire et comportant une rainure circulaire extérieure 58, la rainure circulaire extérieure 58 réalisée dans l'anneau 57 entourant le bord 59 du trou 54, et des moyens 60 pour connecter la tige de fixation 3 avec le diabolo 55. L'anneau 57 est réalisé en un matériau présentant une certaine qualité d'élasticité, par exemple un matériau caoutchouteux ou analogue, pour permettre un certain déplacement relatif entre le diabolo 55 et la partie en "U" 52.

Dans ce cas et en vue de faciliter l'assemblage entre la tige de fixation 3 et la demi-bague 6, les moyens 60 pour connecter la tige de fixation 3 avec le diabolo 55 sont constitués par une percée 61 réalisée dans le diabolo 55 et comportant un premier filetage 62 et par une partie mâle 63 solidaire de la tige de fixation 3, cette partie mâle 63 comportant un second filetage 64 complémentaire du premier 62. De façon préférentielle, le collier comporte en outre une tête d'écrou 70 située entre la partie mâle 63 des moyens de connexion 60 et une extrémité de la tige de fixation 3, la section de la tête d'écrou 70 étant supérieure à celle de la partie mâle 63.

Dans ces conditions, quand on veut fixer un collier selon l'invention sur un support comme un mur ou analogue, on commence par utiliser la tige de fixation en plaçant la tête d'écrou 70 dans une clé par exemple du type à tube, puis on visse la tige 3 dans le mur en la tournant à l'aide de la clé à tube, jusqu'à ce que la tête d'écrou arrive au contact du mur. Ensuite, la percée filetée 61 réalisée dans le diabolo 55 est vissée sur la partie mâle filetée 63 de la tige de fixation.

La structure de collier décrite ci-dessus, notamment de ses moyens de fixation sur le support, confère une certaine souplesse élastique à la liaison entre la tige de fixation 3 et la demi-bague qui lui est associée. Avec ce mode de réalisation du collier il est possible d'orienter l'ensemble des deux demi-bagues par rapport à la tige de fixation 3 quand la tige n'est pas implantée dans le support perpendiculairement à l'axe du tube 2.

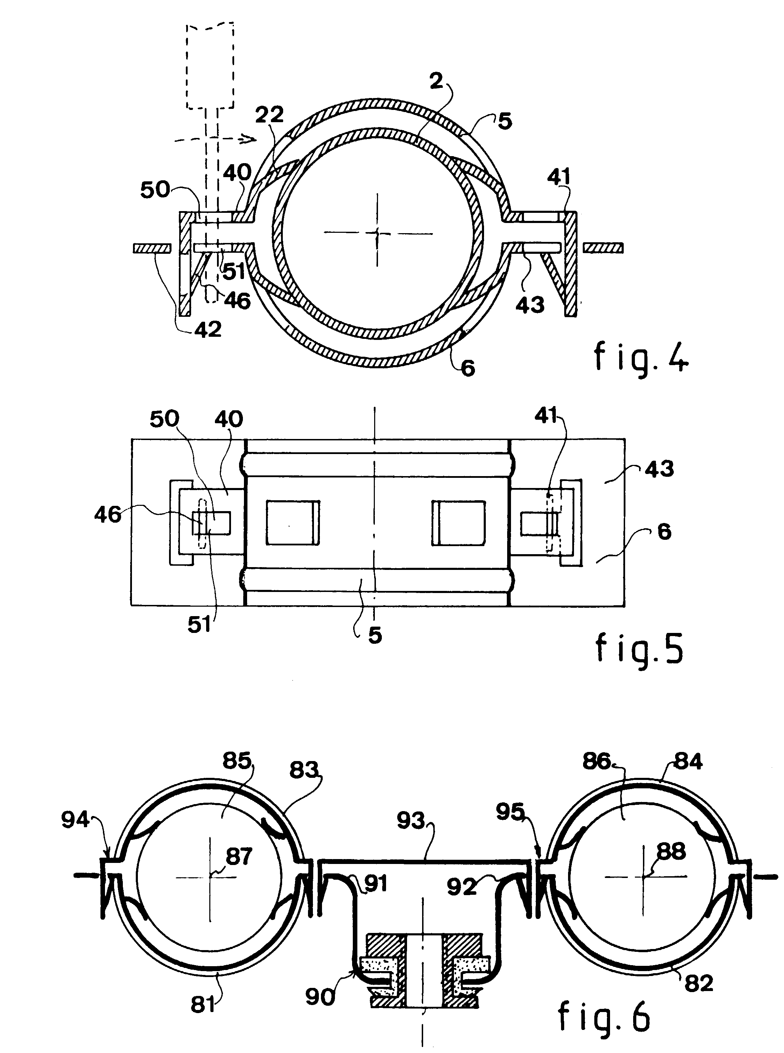

Les figures 4 et 5 représentent un autre mode de réalisation du collier selon l'invention mettant en évidence un perfectionnement aux modes de réalisation selon les figures 1 à 3. Par rapport aux modes de réalisation précédents, le collier comporte en plus au moins deux encoches 50, 51 respectivement réalisées dans deux ailes latérales en contact 40-42 et/ou 41-43, en regard du clip 48. Ces deux encoches permettent de repousser le clip 48 et de le libérer de son contact avec le dessous de l'aile 42 ou 43, de façon à désolidariser les deux ailes latérales en contact 40-42 ou 41-43, et donc les deux demi-bagues, par exemple pour pouvoir libérer le tube ou analogue 2 pour son remplacement. Il suffit, pour ce faire, d'utiliser par exemple l'extrémité d'un tournevis ou analogue, comme représenté en traits interrompus, que l'on passe à travers les deux encoches 50, 51.

Bien entendu, pour que le clip puisse parfaitement jouer son rôle de blocage des deux ailes latérales en contact, la largeur de l'encoche 51 dans l'aile latérale 42, 43 sur laquelle il prend appui est inférieure à celle du clip 48, comme cela est visible sur la figure 5.

Les modes de réalisation décrits ci-dessus permettent de maintenir un tube ou analogue, mais il est bien évident que l'invention peut aussi s'appliquer au maintien d'une pluralité de pièces oblongues, comme des tubes, parallèlement entre elles.

La figure 6 représente un exemple d'une telle application à la fixation de deux pièces oblongues comme des tubes ou analogues avec un seul collier. Plus précisément, le collier selon la réalisation illustrée sur la figure 6 comporte au moins deux première 81 et deuxième 82 demi-bagues reliées par une pièce 90 en forme de "U", deux troisième 83 et quatrième 84 demi-bagues, des moyens 94, 95 pour associer les troisième 83 et quatrième 84 demi-bagues respectivement aux première 81 et deuxième 82 demi-bagues pour constituer deux logements cylindriques 85, 86 d'axes 87, 88 sensiblement parallèles, et un tirant 93 reliant les deux extrémités 91, 92 de la pièce 90 en forme de "U".

Les demi-bagues 81-84, ainsi que les moyens 94, 95, sont par exemple identiques aux demi-bagues et aux moyens permettant de les associer décrits en regard des figures 1 à 5, tandis que le tirant 93 est par exemple constitué par une bande relativement rigide comportant une patte à chacune de ses deux extrémités, chaque patte entrant dans l'orifice (orifice 47 selon les figures 1 à 5) réalisé dans l'aile latérale de la demi-bague 81, 82 liée à la pièce en "U" 90.

## Revendications

1. Collier de maintien, par rapport à un support, d'une pièce oblongue (2) sensiblement cylindrique du type tube ou analogue, comportant:
une tige de fixation (3) apte à être implantée dans ledit support,
deux demi-bagues (5, 6) de forme générale sensiblement cylindrique,
des moyens (7) pour fixer ladite tige sur l'une (6) des deux dites demi-bagues,
des moyens (8) pour associer les deux demi-bagues l'une avec l'autre de façon qu'elles forment ensemble une bague complète (9) définissant un espace (10) sensiblement cylindrique suivant un axe longitudinal (11), fermé latéralement et ouvert à ses deux extrémités (14, 15) de façon à être apte à entourer ladite pièce oblongue (2) d'une section inférieure à celle dudit espace sensiblement cylindrique,
caractérisé par le fait qu'il comporte en outre:
au moins trois pattes solidaires respectivement des deux demi-bagues, et
des moyens (23) pour relier en rotation une première extrémité (24) de chaque patte avec une demi-bague,
des moyens pour exercer un effort élastique sur la seconde extrémité (25) de chaque patte pour tendre à maintenir cette seconde extrémité dans ledit espace (10) et de façon que les trois forces élastiques exercées par les secondes extrémités de ces trois pattes soient sensiblement concourantes sur ledit axe longitudinal (11) pour tendre à maintenir ladite pièce oblongue sensiblement centrée sur ledit axe longitudinal.

2. Collier selon la revendication 1, caractérisé par le fait que lesdites demi-bagues (5, 6) sont réalisées dans un matériau présentant une certaine résilience et que chaque patte (22) est découpée dans la paroi (26) d'une demi-bague (5) et déformée élastiquement pour que sa seconde extrémité (25) se trouve dans ledit espace.

3. Collier selon l'une des revendications 1 et 2, caractérisé par le fait que lesdites pattes sont au moins au nombre de quatre et sont disposées de façon sensiblement symétrique par rapport à des plans (33, 34) passant par l'axe longitudinal (11) dudit espace (10).

4. Collier selon l'une des revendications 1 à 3, caractérisé par le fait que les moyens (8) pour associer les deux demi-bagues (5, 6) l'une avec l'autre comportent au moins deux ailes latérales (40-41, 42-43) réalisées de chaque côté de chaque demi-bague et à chacune de leurs extrémités sensiblement dans des plans passant par l'axe longitudinal dudit espace de façon que, lorsque les deux demi-bagues sont associées pour former une bague complète (9), les ailes latérales de l'une des deux demi-bagues soient au moins partiellement en contact avec les ailes latérales de l'autre demi-bague, et des moyens (44) pour solidariser entre elles lesdites ailes latérales en contact deux à deux, cesdits derniers moyens (44) comportant une partie en saillie (45) réalisée sur au moins l'une (40, 41) des ailes latérales relative à l'une (5) des deux demi-bagues et des moyens (46) pour accrocher cette partie en saillie à l'aile latérale correspondante (42, 43) relative à l'autre demi-bague (6), ces moyens (46) étant constitués par un orifice (47) réalisé dans ladite aile latérale correspondante de façon que ladite partie en saillie puisse y pénétrer et par un clip à ressort (48) solidaire de ladite partie en saillie et apte à venir buter contre l'aile latérale comportant ledit orifice.

5. Collier selon la revendication 4, caractérisé par le fait qu'il comporte au moins deux encoches (50, 51) respectivement réalisées dans deux ailes latérales en contact (40-42, 41-43), en regard du clip (48).

6. Collier selon l'une des revendications 1 à 5, caractérisé par que ladite demi-bague (6) sur laquelle est fixée ladite tige de fixation (3) comporte une partie (52) en forme de "U", les moyens (7) pour fixer ladite tige sur ladite demi-bague (6) reliant ladite tige (3) à la base (53) de ladite partie en "U" (52).

7. Collier selon la revendication 6, caractérisé par le fait que les moyens (7) pour fixer ladite tige de fixation (3) avec la base (53) de ladite partie en "U" comportent un trou (54) réalisé dans la base (53) du "U", un diabolo (55) comportant extérieurement une gorge circulaire (56), un anneau (57) entourant ledit diabolo en étant situé dans ladite gorge circulaire, ledit anneau comportant une rainure circulaire extérieure (58), ladite rainure circulaire extérieure (58) réalisée dans ledit anneau (57) entourant le bord (59) dudit trou (54), et des moyens (60) pour connecter ladite tige de fixation (3) avec ledit diabolo (55).

8. Collier selon la revendication 7, caractérisé par le fait que les moyens (60) pour connecter la tige de fixation (3) avec le diabolo (55) comportent une percée (61) réalisée dans ledit diabolo (55), ladite percée comportant un premier filetage (62), et une partie mâle (63) solidaire de ladite tige de fixation (3), cette partie mâle (63) comportant un second filetage (64) complémentaire du premier (62).

9. Collier selon la revendication 8, caractérisé par le fait qu'il comporte une tête d'écrou (70) située entre la partie mâle (63) et une extrémité de ladite tige de fixation (3), la section de la tête d'écrou (70) étant supérieure à celle de la partie mâle (63).

10. Collier de maintien, par rapport à un support, de deux pièces oblongues (2) sensiblement cylindriques du type tubes ou analogues, selon les revendications précédentes, caractérisé par le fait qu'il comporte au moins deux première (81) et deuxième (82) demi-bagues, les deux première et deuxième demi-bagues étant reliées par une pièce (90) en forme de "U", deux troisième (83) et quatrième (84) demi-bagues, des moyens (94, 95) pour associer les troisième (83) et quatrième (84) demi-bagues respectivement aux première (81) et deuxième (82) demi-bagues pour constituer deux logements cylindriques (85, 86) d'axes (87, 88) sensiblement parallèles, et un tirant (93) reliant les deux extrémités (91, 92) de ladite pièce (90) en forme de "U".

## Patentansprüche

1. Haltekragen für das Halten eines langgestreckten, im wesentlichen zylindrischen Bauteils wie eines Rohrs oder dergleichen relativ zu einem Support, umfassend
eine in den Support implantierbare Befestigungsstange (3), zwei Halbringe (5,6) in im wesentlichen zylindrischer Form,
Mittel (7) für das Befestigen der Stange an einem (6) der beiden Halbringe,
Mittel (8) zum Verbinden der beiden Halbringe miteinander derart, daß sie im wesentlichen einen vollständigen Ring (9) bilden, der einen im wesentlichen zylindrischen Raum (10) längs einer Längsachse (11) begrenzt, der seitlich geschlossen ist und an seinen beiden Enden (14, 15) derart offen ist, daß er das langgestreckte Bauteil (2) mit einem Querschnitt, der kleiner ist als jener des im wesentlichen zylindrischen Raums, umschließen kann,
dadurch gekennzeichnet, daß
mindestens drei mit den beiden Halbringen verbundene Pratzen vorgesehen sind und
Mittel (23), um ein erstes Ende (24) jeder Pratze mit einem Halbring verschwenkbar zu verbinden,
Mittel für das Ausüben einer elastischen Kraft auf das zweite Ende (25) jeder Pratze mit der Tendenz, dieses zweite Ende in dem Raum (10) derart zu halten, daß die drei von den zweiten Enden der drei Pratzen ausgeübten elastischen Kräfte im wesentlichen gleich gelagert bezüglich der Längsachse (11) sind mit der Tendenz, das langgestreckte Bauteil im wesentlichen auf die Längsachse zentriert zu halten.

2. Kragen nach Anspruch 1, dadurch gekennzeichnet, daß die Halbringe (5, 6) aus einem Material hergestellt sind, das eine bestimmte Elastizität aufweist und daß jede Pratze (22) in der Wandung (26) eines Halbrings (5) ausgeschnitten ist und alastisch deformiert ist, damit ihr zweites Ende (25) sich in dem Raum befindet.

3. Kragen nach einem der Ansprüche 1 oder 2, dadurch gekennzeichnet, daß die Pratzen mindestens in der Anzahl von vier vorgesehen sind und im wesentlichen symmetrisch relativ zu Ebenen (33, 34) angeordnet sind, die durch die Längsachse (11) des Raums (10) verlaufen.

4. Kragen nach einem der Ansprüche 1 bis 3, dadurch gekennzeichnet, daß die Mittel (8) zum Verbinden der beiden Halbringe (5, 6) miteinander mindestens zwei seitliche Flügel (40-41, 42-43) umfassen, die auf jeder Seite jedes Halbrings angeordnet sind und mit jedem ihrer Enden im wesentlichen in den durch die Längsachse des Raums verlaufenden Ebenen derart, daß, wenn die beiden Halbringe verbunden sind, um den vollständigen Ring (9) zu bilden, die seitlichen Flügel eines der beiden Halbringe mindestens teilweise in Kontakt mit den seitlichen Flügeln des anderen Halbrings sind und daß Mittel (44) zum Verbinden der seitlichen Flügel miteinander in paarweisem Kontakt vorgesehen sind, welche letzteren Mittel (44) eine vorspringende Partie (45) umfassen, ausgebildet auf zumindest einem (40, 41) der seitlichen Flügel relativ zu einem (5) der beiden Halbringe und Mittel (46) zum Verankern dieser vorspringenden Partie an dem entsprechenden seitlichen Flügel (42, 43) relativ zum anderen Halbring (6), wobei diese Mittel (46) von einer Öffnung (47), eingebracht in den entsprechenden seitlichen Flügel gebildet werden derart, daß die vorspringende Partie in sie eindringen kann und durch einen Federclip (48), der mit der vorspringenden Partie verbunden ist und sich an den die Öffnung aufweisenden seitlichen Flügel anlegen kann.

5. Kragen nach Anspruch 4, dadurch gekennzeichnet, daß er mindestens zwei Einschnitte (50, 51) umfaßt, ausgebildet in den einander kontaktierenden seitlichen Flügeln (40-42, 41-43) gegenüber dem Clip (48).

6. Kragen nach einem der Ansprüche 1 bis 5, dadurch gekennzeichnet, daß der Halbring (6), an dem die Befestigungsstange (3) befestigt ist, eine U-förmige Partie (52) umfaßt, wobei die Mittel (7) für das Befestigen der Stange an dem Halbring (6) die Stange (3) mit der Basis (53) der U-förmigen Partie (52) verbinden.

7. Kragen nach Anspruch 6, dadurch gekennzeichnet, daß die Mittel (7) zum Befestigen der Befestigungsstange (3) an der Basis (53) der U-förmigen Partie ein Loch (54) umfassen, das in der Basis (53) des "U" ausgebildet ist, einen Diabolo (55) mit einer äußeren ringförmigen Nut (56), einen den Diabolo umschließenden Ring (57), der in der ringförmigen Nut sitzt, wobei der Ring eine äußere kreisförmige Nut (58) aufweist, welche äußere ringförmige Nut (58), die in dem Ring (57) ausgebildet ist, den Rand (59) des Lochs (54) umschließt und Mittel (60) für das Verbinden der Befestigungsstange (3) mit dem Diabolo (55).

8. Kragen nach Anspruch 7, dadurch gekennzeichnet, daß die Mittel (60) für das Verbinden der Befestigungsstange (3) mit dem Diabolo (54) eine Bohrung (61), die in dem Diabolo (55) ausgebildet ist, umfassen, welche Bohrung ein erstes Gewinde (62) aufweist und eine mit der Befestigungsstange (3) verbundene Einschraubpartie (63), die ein zweites, zum ersten Gewinde (62) komplementäres zweites Gewinde (64) aufweist.

9. Kragen nach Anspruch 8, dadurch gekennzeichnet, daß er einen Mutternkopf (70) umfaßt, der sich zwischen der Einschraubpartie (63) und einem Ende der Befestigungsstange (3) befindet, wobei der Querschnitt des Mutternkopfes (70) größer ist als jener der Einschraubpartie (63).

10. Haltekragen für das Halten von zwei langgestreckten Bauteilen (2), die im wesentlichen zylindrisch vom Rohrtyp oder dergleichen sind, relativ zu einem Support nach den vorangehenden Ansprüchen, dadurch gekennzeichnet, daß er mindestens zwei erste (81) und zweite (82) Halbringe umfaßt, wobei die beiden ersten und zweiten Halbringe durch ein U-förmiges Teil (90) verbunden sind, zwei dritte (83) und vierte (84) Halbringe umfaßt, Mittel (94, 95) zum Verbinden der dritten (83) und vierten (84) Halbringe mit dem ersten Halbring (81) bzw. zweiten Halbring (82) umfaßt, um zwei zylindrische Aufnahmen (85, 86) mit im wesentlichen parallelen Achsen (87, 88) zu bilden, und ein Zugelement (93), das die beiden Enden (91, 92) des U-förmigen Teils (90) verbindet.

## Claims

1. A collar for holding a substantially cylindrical oblong part (2) of the tube type or similar relative to a support, the collar comprising:
a fastener rod (3) suitable for being implanted in said support;
two half-rings (5, 6) of substantially cylindrical general shape;
means (7) for fixing said rod to one (6) of said two half-rings; and
means (8) for associating the two half-rings to each other so that together they form a complete ring (9) defining a substantially cylindrical space (10) on a longitudinal axis (11) which is closed laterally and open at both ends (14, 15) so as to be suitable for surrounding said oblong part (2) of section that is smaller than that of said substantially cylindrical space,
the collar being characterized by the fact that it further comprises:
at least three tabs respectively secured to the two half-rings;
means (23) for rotatably connecting a first end (24) of each tab with a half-ring; and
means for exerting a resilient force on the second end (25) of each tab so as to urge said second end into said space (10) and so that the three resilient forces exerted by the second ends of the three tabs coincide substantially on said longitudinal axis (11), thereby tending to maintain said oblong part substantially centered on said longitudinal axis.

2. A collar according to claim 1, characterized by the fact that said half-rings (5, 6) are made of a material having a degree of resilience, and that each tab (22) is cut out from the wall (26) of a half-ring (5) and is elastically deformed so that the second end (25) thereof lies within said space.

3. A collar according to claim 1 or 2, characterized by the fact that there are at least four of said tabs which are disposed substantially symmetrically relative to planes (33, 34) including the longitudinal axis (11) of said space (10).

4. A collar according to any one of claims 1 to 3, characterized by the fact that the means (8) for associating the two half-rings (5, 6) to each other comprise at least two lateral tabs (40-41, 42-43) formed on each side of each half-ring, and at each of the ends thereof substantially in planes that include the longitudinal axis of said space such that when the two half-rings are associated with each other to form a complete ring (9) the lateral tabs of one of the two half-rings are at least partially in contact with the lateral tabs of the other half-ring, and means (44) for securing together said lateral tabs that are in contact in pairs, said means (44) including a projecting portion (45) formed on at least one (40, 41) of the lateral tabs of one (5) of the two half-rings, and means (46) for catching said projecting portion on the corresponding lateral tab (42, 43) relating to the other half-ring (6), said means (46) being constituted by an orifice (47) formed through said corresponding lateral tab so that said projecting portion can penetrate therein, and by a spring clip (48) secured to said projecting portion and suitable for coming into abutment against the lateral tab including said orifice.

5. A collar according to claim 4, characterized by the fact that it includes at least two notches (50, 51) respectively formed in two contacting lateral tabs (40-42, 41-43), in register with the clip (48).

6. A collar according to any one of claims 1 to 5, characterized by the fact that said half-ring (6) on which said fastener rod (3) is fixed comprises a U-shaped portion (52), the means (7) for fixing said rod to said half-ring (6) connecting said rod (3) to the base (53) of said U-shaped portion (52).

7. A collar according to claim 6, characterized by the fact that the means (7) for fixing said fastener rod (3) to the base (53) of said U-shaped portion comprise a hole (54) formed through the base (53) of the U-shape, an hourglass-shaped insert (55) having an outer circular neck (56), a ring (57) surrounding said insert and situated in said circular neck, said ring including an outer circular groove (58) formed in said ring (57) and surrounding the edge (59) of said hole (54), and means (60) for connecting said fastener rod (3) to said bushing (55).

8. A collar according to claim 7, characterized by the fact that the means (60) for connecting the fastener rod (3) to the insert (55) comprise a bore (61) formed in said bushing (55), said bore having an inside first thread (62), and a male portion (63) secured to said fastener rod (3), said male portion (63) having an outside second thread (64) complementary to the first thread (62).

9. A collar according to claim 8, characterized by the fact that it includes a nut head (70) situated between the male portion (63) and one end of said fastener rod (3), the section of said nut head (70) being greater than that of the male portion (63).

10. A collar for holding two substantially cylindrical oblong parts (2) of the tube type or similar relative to a support and according to the preceding claims, characterized by the fact that it comprises at least first and second half-rings (81, 82), the first and second half-rings being interconnected by a U-shaped part (90), third and fourth half-rings (83, 84), means (94, 95) for associating the third and fourth half-rings (83, 84) respectively with the first and second half-rings (81, 82) to constitute two cylindrical housings (85, 86) having substantially parallel axes (87, 88), and a tie rod (93) interconnecting the two ends (91, 92) of said U-shaped part (90).
